# EUROPEAN PATENT SPECIFICATION

(11) **EP 2 994 291 B1**
(45) Date of publication and mention of the grant of the patent: **16.01.2019**
(21) Application number: 14720165.1
(22) Date of filing: 30.04.2014
(51) Int. Cl.: B29C 63/00, B29C 59/00, B26D 3/08, B08B 9/08, B29B 17/02

(54) **METHOD AND SYSTEM FOR CUTTING A PRE-CUT LINE IN LABELS OR LABEL WEBS**
VERFAHREN UND SYSTEM ZUM SCHNEIDEN EINER VORGESCHNITTENEN LINIE IN ETIKETTEN ODER ETIKETTENBAHNEN
PROCÉDÉ ET SYSTÈME POUR DÉCOUPER UNE LIGNE PRÉDÉCOUPÉE EN ÉTIQUETTES OU EN BANDES D'ÉTIQUETTES

(30) Priority: 06.05.2013 IT PR20130038
(43) Date of publication of application: 16.03.2016
(73) Proprietor: Z-Italia S.R.L., 46014 Castellucchio (MN) (IT)
(72) Inventor: BEVILACQUA, Giovanni, I-46014 Castellucchio (MN) (IT); ORLANDI, Ireneo, I-46014 Castellucchio (MN) (IT); LANFREDI, Sofia Paolo, I-46014 Castellucchio (MN) (IT); FABBRI, Damiano, I-46014 Castellucchio (PR) (IT); PERUFFO, Antonio, I-46014 Castellucchio (MN) (IT); DI PINTO, Ivan, I-46014 Castellucchio (MN) (IT)
(74) Representative: Guareschi, Antonella
(86) International application number: PCT/EP2014/058909
(87) International publication number: WO 2014/180738

(56) References cited:
- JP-A- 2009 204 866
- JP-A- 2010 002 458
- JP-A- 2011 098 783

## Description

### FIELD OF APPLICATION OF THE INVENTION

The present invention refers to the field of labeling systems with particular reference to obtaining a system for facilitating the detachment of the label from the container.

Labeling methods known from the prior art are the Shrink sleeve and Roll fed methods. The invention only applies to the Roll fed methods.

The Shrink sleeve labeling packages with a continuous tube film wound in a reel containers made of plastic or glass (cf. e.g. JP2011098783). The tube is respectively unrolled, cut and fitted on the container thus thermo-retracted to adhere it to the profile.

The Roll fed packages plastic or glass containers with a continuous film reel. In this case, the film is respectively unrolled, cut and applied to the container through glue which can be already present on the reel or applied after cutting the same into pieces to form the labels, which are transferred through drum devices on the containers.

The state of the art provides for reels, both of the Shrink sleeve and Roll fed type, produced by the Converters, who purchase the raw material from producers of plastic films, thus at a place different from that of the bottling line where there are, among others, the labeling machines which transfer the reels cutting them and possibly gluing them on the containers.

One of the most currently felt drawbacks lies in the separation of the label from the container; actually, once used, it is not easy to detach the two materials which are thus discarded indistinctively, to the detriment of the correct procedures of differentiation which would provide for two independent solutions for recycling the same.

### DESCRIPTION AND ADVANTAGES OF THE INVENTION

An object of the present invention is to provide a system so as to be able to facilitate the removal of the label from the relative containers.

The state of the art currently only provides for tube reels, adapted for Shrink sleeve labeling, a cut obtained through mechanical punching means by the Converters, such cut being longitudinal with respect to the tube allows to easily tear the tube applied to the bottle, as mentioned above, during recycling.

The method and system described and claimed hereinafter, provides for cutting the continuous web (from which the label shall then be obtained) through at least one laser beam cut for Roll Fed reels introducing the punching by means of a laser.

The cut shall not be continuous so as to create a linear pinhole (transverse for the Roll fed reels) along the continuous film web.

Thus, this shall facilitate the removal of the label by the user for the correct disposal.

Said objects and advantages are attained by the method and system for punching labels or label webs, subject of the present invention, characterized by what is provided for in the following claims.

### BRIEF DESCRIPTION OF THE DRAWINGS

This and other characteristics shall be more apparent from the following description of some embodiments illustrated, purely by way of non-limiting example, in the attached figures.

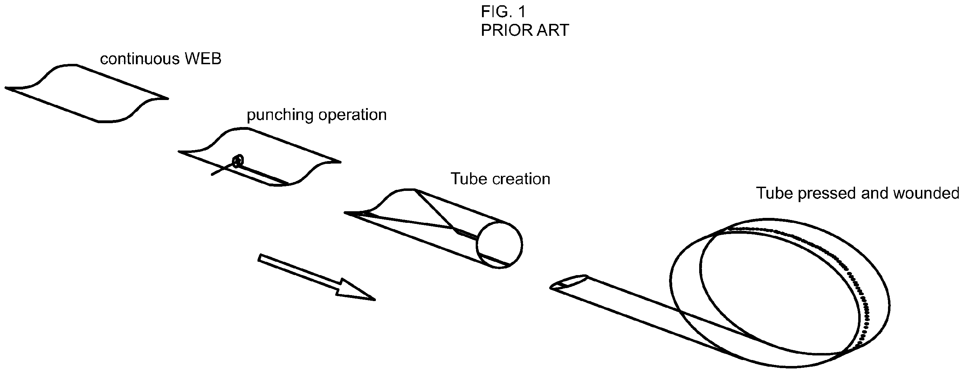

- Figure 1: illustrates the technique of the prior art and used up to date for obtaining a continuous film tube, where the punching operation is carried out by mechanical perforating devices. Said tube is then cut and fitted on the containers by machines, referred to as sleeving machines, different from the ones that obtained and punched the continuous tube reel.
- Figure 2: illustrates a first system for obtaining the cut/pinhole Roll fed label through laser beam, in a bottling plant by directly using the laser beam on a labeling machine.
- Figure 3: illustrates another system not covered by the invention for obtaining the laser cut on the tube label for the Shrink sleeve.

### EMBODIMENT

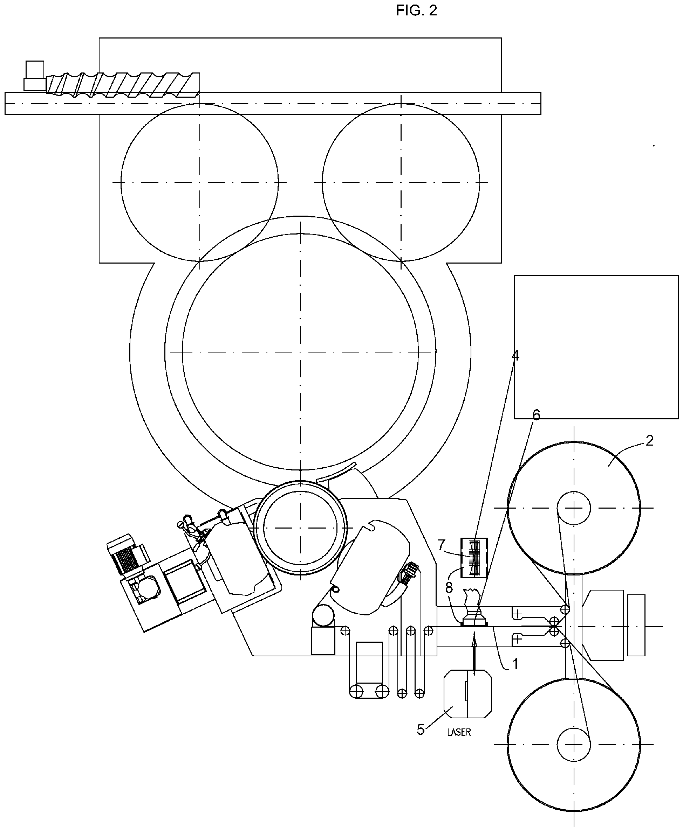

With particular reference to figure 2 a labeling station of the Roll fed type, i.e. a labeling station in which the label is obtained following the cutting of pieces of a continuous film web 1 obtained from unrolling at least one reel 2 is indicated in its entirety with 10.

The web 1 thus being cut to the suitable size as a function of the container.

Along said path for the continuous unrolling and advancement of the web 1 there is present an apparatus 5 or cutting system subject of the invention, the system is indicated with 5 in figure 2.

The cut on the continuous web is obtained through at least one laser beam emitted by a special apparatus, schematized in the figure.

The cut, or the laser emission, is not continuous but intermittent so as to obtain a linear pinhole on the film web. Precisely, the continuous film web is cut transversely to the unrolling direction thereof.

Precisely it is provided for to:
a. Unroll at least one reel with the film web wound,
b. Transversely cutting said web through a laser beam,
c. Applying the label, with the Roll fed technique in this case.

The aforementioned cut is carried out according to an "hourglass-like" or butterfly trajectory of the apparatus 5 emitting the laser beam, wherein the term hourglass-like or butterfly cut is used to refer to a cut like the one indicated by reference 4 and i.e. the inclined travels of said trajectory, corresponding to the laser beam emission steps, there are alternated non-emission linear trajectories and recovery of the position of the cutting apparatus.

In any case, at the end the pinhole created by the cut shall be transverse, being a combination of the linear advancement travels of the web and inclined cut.

Additionally to the laser emitter 5, the system further comprises a suctioning apparatus 6, a support and/or abutment 8 net 7: said components allow holding the continuous film web to be cut in position and at a preset distance from the laser emitter head and evacuate films produced during the cutting.

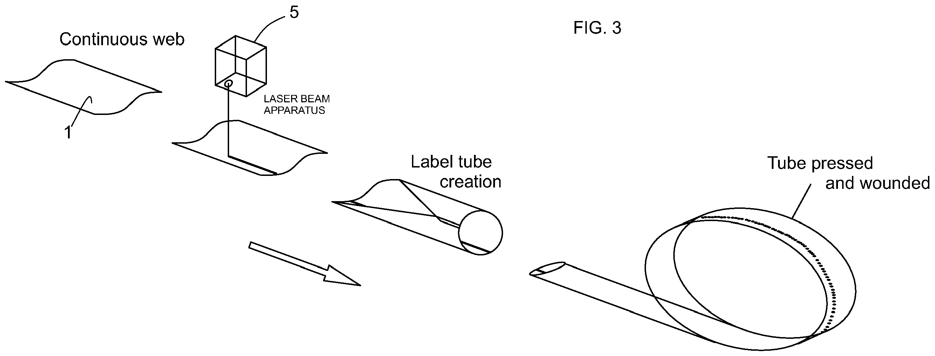

With particular reference to figure 3 there is illustrated a variant of the label, of the tubular type, not forming part of the present invention.

In any case, like before, the label is always obtained by cutting pieces of the continuous film web 1, previously wound on a reel.

During the unwinding of the film, and before the creation of the label tube, there is performed at least one cut on the continuous web with at least one laser beam; following the cut a linear pinhole is obtained on the film web.

In this variant the continuous film web is cut longitudinally to its unrolling direction.

Precisely, it is provided for to:
a. Unroll at least one roll with the film web unrolled,
b. Longitudinally cutting said web through laser,
c. Creating a web tube with revolution axis along the unwinding axis of the latter.

Like in the previous case, in this case there may also be present elements adapted to hold the continuous web film to be cut in position and at a preset distance from the laser emitter head.

## Claims

1. Method for obtaining a pinhole on a continuous film web (1), said film web being adapted to form one or more roll-feed type labels for containers, the method forms at least one transversely incision respect to the unrolling direction of the continuous film web (1); said incision being formed with at least one laser beam; after the cut, a linear pinhole is made on said film web (1).

2. Method according to claim 1, **characterized in that** it provides a step of applying the label on the container after:
a. Unrolling at least one reel with the film web wound thereon,
b. Transversely cutting said web using a laser beam,

3. Method according to claim 1, **characterized in that** the cutting is performed according to an "hour-glass-like" or butterfly wings trajectory of the apparatus emitting the laser beam; the inclined travels of said trajectory, corresponding to the steps of emitting the laser beam, alternate with the linear trajectories of non-emission and recovery of the position of the cutting apparatus.

4. Labeling station comprising a Roll-fed type cutting apparatus (5) for cutting at least one film web for obtaining reel-feed type labels, **characterized in that** said apparatus (5) is at least one laser emitter apparatus (5) configured for transversely cutting of the film web (1) according to method 1.

5. System according to claim 4, **characterized in that** it comprises, additionally with respect to the laser emitter (5), a suctioning apparatus (6), net (7) for support and/or abutment (8) for holding the film (1) in position and at a preset distance from the laser emitter head.

## Patentansprüche

1. Verfahren zum Erhalten einer Lochblende auf einem kontinuierlichen Filmstreifen (1), wobei der genannte Filmstreifen dazu ausgebildet ist, ein oder mehrere Etiketten des Typs zu bilden, der von einer Rolle zugeführt wird, für Behälter, wobei das Verfahren mindestens einen einzigen Quereinschnitt bildet in Bezug auf die Abwicklungsrichtung des kontinuierlichen Filmstreifens (1); wobei der genannte Einschnitt mit mindestens einem Laserstrahl gebildet wird; nach dem Schneiden wird eine lineare Lochblende auf dem genannten Filmstreifen (1) hergestellt.

2. Verfahren nach Anspruch 1, **dadurch gekennzeichnet, dass** es einen Vorgang zum Aufbringen des Etiketts auf den Behälter umfasst, nach folgenden Schritten:
a. Abwickeln von mindestens einer Rolle mit aufgewickeltem Folienstreifen,
b. Querschneiden des genannten Streifens durch einen Laserstrahl.

3. Verfahren nach Anspruch 1, **dadurch gekennzeichnet, dass** der Schnitt nach einer Flugbahn mit der Gestalt einer "Sanduhr" oder von Schmetterlingsflügeln, der den Laserstrahl emittierenden Vorrichtung durchgeführt wird; wobei die geneigten Verschiebungen der genannten Flugbahn, die den Schritten der Laserstrahlemission entsprechen, wechseln sich mit den linearen Flugbahnen ohne Emission und der Wiederherstellung der Position der Schneidevorrichtung ab.

4. Etikettierungsstation, umfassend eine Schneidevorrichtung (5) des Typs, der von einer Rolle geliefert wird, um mindestens einen Filmstreifen zu schneiden, um Etiketten des Typs mit Rollenzuführung zu erhalten, **dadurch gekennzeichnet, dass** die genannte Vorrichtung (5) mindestens eine Vorrichtung ist mit einer Laseremission (5), die zum Querschneiden des Filmstreifens (1) gemäß Verfahren 1, konfiguriert ist.

5. System nach Anspruch 4, **dadurch gekennzeichnet, dass** es ferner bezüglich des Lasersenders (5) eine Absaugvorrichtung (6) und ein Stütz- und/oder Stoppnetz (8) zur Fixierung der Position des Films (1) in einem vorbestimmten Abstand vom Kopf des Lasersenders, umfasst.

## Revendications

1. Procédé d'obtention d'un trou d'épingle sur une bande de film continu (1), ladite bande de film étant apte à former une ou plusieurs étiquettes du type alimenté par un rouleau, pour des récipients, le procédé formant au moins une incision transversale par rapport au sens de déroulement de la bande de film continu (1); ladite incision étant formée avec au moins un faisceau laser; après découpe, un trou d'épingle linéaire est réalisé sur ladite bande de film (1).

2. Procédé selon la revendication 1, **caractérisé en ce qu'**il comprend une opération d'application de l'étiquette sur le récipient, après:
a. avoir déroulé au moins un rouleau entouré de la bande de film,
b. couper transversalement ladite bande à l'aide d'un faisceau laser.

3. Procédé selon la revendication 1, **caractérisé en ce que** la coupe est effectuée selon une trajectoire en forme de "sablier" ou en forme d'ailes de papillon, avec le dispositif émettant le faisceau laser; les déplacements inclinés de ladite trajectoire, correspondant aux opérations d'émission du faisceau laser, alternent avec les trajectoires linéaires de non-émission et de la récupération de la position du dispositif de coupe.

4. Station d'étiquetage comprenant un dispositif de coupe (5) du type alimenté par un rouleau pour couper au moins une bande de film afin d'obtenir des étiquettes du type alimenté par rouleau, **caractérisée en ce que** ledit dispositif (5) est au moins un dispositif d'émission laser (5), configuré pour couper transversalement la bande de film (1) selon le procédé 1.

5. Système selon la revendication 4, **caractérisé en ce qu'**il comporte en outre, par rapport à l'émetteur laser (5), un dispositif d'aspiration (6), un réseau de support et/ou d'arrêt (8) pour fixer le film (1) en position est à une distance prédéterminée de la tête de l'émetteur laser.
